Europäisches Patentamt

European Patent Office

Office européen des brevets

(19)

(11) Veröffentlichungsnummer: **0 072 999**
**A1**

(12) **EUROPÄISCHE PATENTANMELDUNG**

(21) Anmeldenummer: **82107464.8**

(22) Anmeldetag: **17.08.82**

(51) Int. Cl.³: **H 02 K 9/14**
**H 02 K 5/20**

(30) Priorität: **28.08.81 DE 3134080**

(43) Veröffentlichungstag der Anmeldung:
**02.03.83 Patentblatt 83/9**

(84) Benannte Vertragsstaaten:
**DE FR GB IT SE**

(71) Anmelder: **ROBERT BOSCH GMBH**
**Postfach 50**
**D-7000 Stuttgart 1(DE)**

(72) Erfinder: **Frister, Manfred, Dipl.-Ing.**
**Wolfsgalgen 29**
**D-7141 Schwieberdingen(DE)**

(54) **Elektrische Maschine, insbesondere Drehstromgenerator, mit innenliegenden Kühlkanälen.**

(57) Elektrische Maschine, insbesondere Drehstromgenerator mit einem aus gestanzten Blechlamellen (5) gestapelten ringförmigen Ständerblechpaket (5), das an seinem Außenumfang in einem Gehäuse (1) gefaßt ist, wobei zwischen je zwei von mehreren Anlagezonen (4) zwischen der Gehäusewand und dem Ständer jeweils eine von mehreren, als Kühlkanäle wirksame Aussparungen (2) in der Gehäusewand vorgesehen ist und am Außenrand der Ständerbleche (5) radial abstehende Ansätze (7) angeschnitten sind, die in die Aussparungen (2) hineinragen.

FIG. 1

EP 0 072 999 A1

R. **725 5**

7.8.1981 Lr/Hm

0072999

ROBERT BOSCH GMBH, 7OOO STUTTGART 1

Elektrische Maschine, insbesondere Drehstromgenerator,
mit innenliegenden Kühlkanälen

Die Erfindung betrifft eine elektrische Maschine, insbesondere einen zum Betrieb auf Kraftfahrzeugen vorgesehenen Drehstromgenerator mit mehreren zur Innenkühlung vorgesehenen Kühlkanälen und mit einem aus gestanzten Blechlamellen gestapelten, ringförmigen Ständerblechpaket, das
an seinem Außenumfang in einem Gehäuse gefaßt ist, wobei
zwischen je zwei von mehreren Anlagezonen zwischen der
Gehäusewand und dem Ständer jeweils eine von mehreren
einen Kühlkanal bildenden Aussparungen in der Gehäusewand vorgesehen ist.

Aus der DE-AS 10 84 364 ist ein Wechselstromgenerator
der Klauenpolbauart mit Ölkühlung bekannt, bei welchem
in dem gegossenen Lagerschild zur Drehachse parallele
Bohrungen für den Durchgang des Kühlöles vorgesehen sind.
Um einen guten Wärmeübergang von dem Ständerblechpaket,
das in den Kühlbohrungen fließende Kühlmittel zu erzeugen,
verlaufen diese Längsbohrungen nur in kleinem radialen
Abstand von der Paßfläche des äußeren Umfangs des Ständerblechpakets.

...

Der Erfindung liegt die Aufgabe zugrunde bei einer elektrischen Maschine der eingangs genannten Art die Wärmeabgabe vom Ständerblechpaket an die Kühlkanäle zu verbessern. Hierzu sind erfindungsgemäß die im Kennzeichen des Anspruchs 1 angegebenen Maßnahmen vorgesehen.

Zweckmäßige Ausgestaltungen der Erfindung ergeben sich aus den Unteransprüchen in Verbindung mit den nachstehend beschriebenen Ausführungsbeispielen, nämlich in ihrem Ständeraufbau verschiedenartigen Drehstromgeneratoren, die in der Zeichnung ausschnittsweise in einem quer zu ihrer Längsachse geführten Schnitt in axialer Draufsicht wiedergegeben sind.

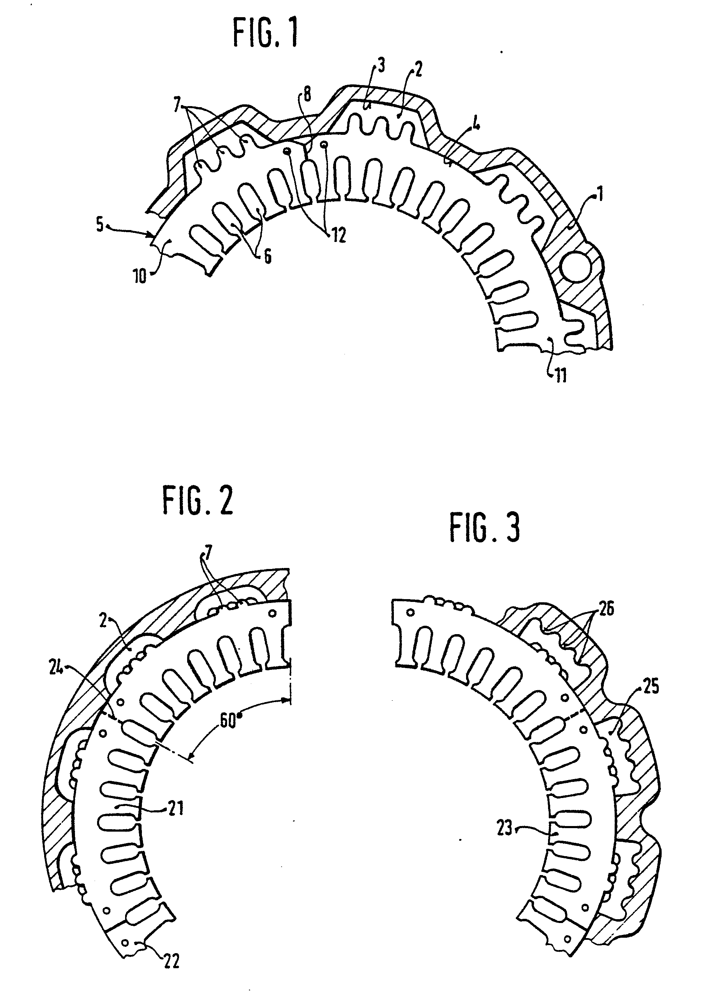

In den Figuren 1 bis 3 ist mit 1 das im Aluminium-Druckgußverfahren hergestellte Generatorgehäuse bezeichnet, das an seinem Außenumfang mehrere in Längsrichtung verlaufende, zur nicht dargestellten Drehachse des Generators parallele Kühlkanäle 2 enthält. Die Kühlkanäle 2 sind beim Ausführungsbeispiel nach Figur 1 durch Aussparungen erzielt, die bei der Herstellung des Gehäuses durch entsprechende Formkerne vom Druckgußwerkstoff freigehalten werden. Radial nach außen sind die Kühlkanäle 2 jeweils durch eine glatte Kanalwand 3 begrenzt. Zwischen den Kühlkanälen 2 liegen am inneren Umfang des Gehäuses 1 mehrere Paßzonen 4, die sorgfältig über den inneren Umfang des Gehäuses ausgedreht sind und das aus einzelnen Lamellen geschichtete Ständerblechpaket 5 aufnehmen. Nach dem Zusammenbau weist das Ständerblechpaket 5 zahlreiche über die ganze axiale Länge des Pakets sich erstreckende Nuten 6 auf, in welche vor dem Einbau des Ständerblechpakets in das Gehäuse die nicht dargestellten, über den Innenumfang des Pakets verteilt angeordneten Drehstromwicklungen eingelegt werden können.

...

Um eine hohe Ausnutzung des aufgewendeten Eisenvolumens zu ermöglichen, ist die Wärmeübergangsfläche, welche an den einzelnen Kühlkanälen zur Verfügung steht dadurch vergrößert, daß am Außenrand der Ständerbleche radial abstehende Ansätze 7 angeschnitten sind, welche in die Kühlkanäle 2 hineinragen. Beim Ausführungsbeispiel nach Figur 1 sind jeder der als Kühlkanäle 2 dienenden Aussparungen im Gehäuse 1 jeweils drei Ansätze 7 zugeordnet. In Figur 1 ist im Bereich der bei 4 angedeuteten Paßzone eine Stoßfuge 8 angedeutet, an welcher die Endabschnitte zweier in der gleichen Lage angeordneten Halbringlamellen 10 bzw. 11 aneinander stoßen und mit der darunterliegenden Lamellenlage durch Nieten oder Buckelschweißverbindungen 12 zusammengehalten werden. Durch die Ausbildung jeder Lamellenlage aus drei untereinander gleichen, sich jeweils über 120$^{\circ}$ erstreckenden Ringsek-toren ergibt sich die Möglichkeit einer leichten Herstellung des Ständers.

Die gleichen Vorteile weist auch das Ausführungsbeispiel nach Figur 2 auf, bei welchem die Teillamellen 21, 22 und 23 sich über 120$^{\circ}$ erstrecken und um jeweils 60$^{\circ}$ gegen-über den Nachbarlagen versetzt sind, wie die bei 24 mit unterbrochenen Linien angedeutete Stoßfuge der darunterliegenden Lamellenlage zeigt. Im Gegensatz zum vorher beschriebenen Ausführungsbeispiel sind für jede der drei 120$^{\circ}$-Teillamellen jeweils vier Kühlkanäle 2 vorgesehen, jedoch sind abwechslungsweise drei Ansätze 7 vorgesehen, die in einen der Kühlkanäle 2 hineinragen, während dem nächsten in Umfangsrichtung folgenden Kühlkanal nur zwei Ansätze 7 an der Außenseite der Ständerbleche zugeordnet sind. Wenn die Teillamellen von Lage zu Lage ebenfalls um 90$^{\circ}$ versetzt werden, ergibt sich eine besonders große Ver-

...

wirbelung der in Strömungsrichtung abwechslungsweise hintereinanderliegenden zwei Ansätze und der darauffolgenden drei
Ansätze.

Beim Ausführungsbeispiel nach Figur 3 sind die gleichen
Teilamellen wie beim Ausführungsbeispiel nach Figur 2 vorgesehen, jedoch abweichend von Figur 2 an der Innenseite
der Kühlkanäle 25 jeweils drei Kühlrippen 26 angeformt,
durch welche die Wärmeabfuhr weiter verbessert werden
kann.

R. 7255

7.8.1981 Lr/Hm

ROBERT BOSCH GMBH, 7000 STUTTGART 1

Ansprüche

1. Elektrische Maschine, insbesondere Drehstromgenerator mit einem aus gestanzten Blechlamellen (5) gestapelten, ringförmigen Ständerblechpaket (5), das an seinem Außenumfang in einem Gehäuse (1) gefaßt ist, wobei zwischen je zwei von mehreren Anlagezonen (4) zwischen der Gehäusewand und dem Ständer jeweils eine von mehreren als Kühlkanäle wirksame Aussparungen (2) in der Gehäusewand vorgesehen ist, dadurch gekennzeichnet, daß am Außenrand der Ständerbleche (5) radial abstehende Ansätze (7) angeschnitten sind, die in die Aussparungen (2) hineinragen.

2. Maschine nach Anspruch 1, dadurch gekennzeichnet, daß jeder Aussparung (2) mindestens ein Ansatz (7) zugeordnet ist.

...

3. Maschine nach Anspruch 2, dadurch gekennzeichnet, daß jeder Aussparung (2) zwei oder drei Ansätze (7) zugeordnet sind.

4. Maschine nach Anspruch 3, dadurch gekennzeichnet, daß abwechslungsweise einer der Aussparungen (2) zwei Ansätze (7) und in Umfangsrichtung fortschreitend der nächsten Aussparung (2) drei Ansätze (7) zugeordnet sind.

5. Maschine nach einem der Ansprüche 1 bis 4, dadurch gekennzeichnet, daß die Blechlamellen (5) ringsektorförmig ausgebildet sind.

6. Maschine nach Anspruch 5, dadurch gekennzeichnet, daß die Blechlamellen (5) sich über $360^{\circ} \cdot \frac{1}{n}$ erstrecken, wobei n=2, n=3 oder n=4 ist.

7. Maschine nach Anspruch 6, dadurch gekennzeichnet, daß die Lamellen (5) von einer Lage zur nächsten sich überlappend geschichtet sind, vorzugsweise sich um $180^{\circ} \cdot \frac{1}{n}$ überlappen.

8. Maschine nach Anspruch 7, dadurch gekennzeichnet, daß an den die Aussparungen (25) im Gehäuse (1) begrenzenden Wänden (3) mehrere gegen die Gehäuseachse radial vorspringende Rippen (26) vorgesehen sind.

FIG. 1

FIG. 2

FIG. 3

Europäisches
Patentamt

**EUROPÄISCHER RECHERCHENBERICHT**

Nummer der Anmeldung

**0072999**

EP 82 10 7464.8

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | CH - A - 317 647 (SIEMENS-SCHUCKERTWERKE) <br> * Seite 1, Zeilen 35 bis 50 ; Seite 2, Zeilen 7 bis 31 ; Seite 3, Zeilen 43 bis 68 * <br> -- | 1-3 |
| Y | FR - A - 736 474 (P. EHRMANN) <br> * Seite 4, Zeilen 46 bis 77 * <br> -- | 1-3 |
| Y | DE - U - 1 746 614 (BROWN, BOVERI & CIE) <br> * Seite 4, Absatz 2 bis Seite 5, Mitte * <br> -- | 1-3 |
| Y | DE - C - 388 676 (J.B. WIARD) <br> * Seite 2, Zeilen 75 bis 81 * <br> -- | 1-3 |
| A | FR - A - 727 615 (P. EHRMANN) <br> * Seite 3, Zeilen 62 bis 73 ; Fig. 3 * <br> -- | 1,4 |
| A | FR - A - 592 372 (ATELIERS DE CONSTRUCTIONS ELECTRIQUES DE LYON ET DU DAUPHINE) <br> * Seite 2, Zeilen 62 bis 73 * <br> -- | |
| A | FR - A - 1 167 706 (MAISON BREGUET) <br> * Seite 2, linke Spalte, Absatz 3 * <br> ---- | |

**KLASSIFIKATION DER ANMELDUNG (Int Cl³)**

H 02 K 9/14
H 02 K 5/20

**RECHERCHIERTE SACHGEBIETE (Int Cl³)**

H 02 K 1/00
H 02 K 5/00
H 02 K 9/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 29-10-1982 | GESSNER |

EPA form 1503.1  06.78